# EUROPEAN PATENT SPECIFICATION

(11) **EP 1 126 665 B1**
(45) Date of publication and mention of the grant of the patent: **28.04.2010**
(21) Application number: 01101605.2
(22) Date of filing: 25.01.2001
(51) Int. Cl.: H04L 12/56, H04L 12/18

(54) **Source learning for multi-path backplane data switch**
Mehrweg-Rückwandsdatenvermittlung mit Lernen der Quelle
Apprentissage de source pour un panneau arriére commutateur de données multivoies

(30) Priority: 18.02.2000 US 185154 P; 20.11.2000 US 718046
(43) Date of publication of application: 22.08.2001
(73) Proprietor: Alcatel Lucent, 75008 Paris (FR)
(72) Inventor: Hoogenboom, Christopher L., Oxnard, CA 93030 (US); Wallner, John D., Camarillo, CA 93010 (US); Wilson, Mike, Thousand Oaks, CA 91361 (US); Shingane, Mangesh, San Jose, CA 95123 (US)
(74) Representative: Schmidt, Werner Karl

(56) References cited:
- EP-A- 0 887 970
- WO-A-99/00945
- US-A- 5 898 687
- US-B1- 6 944 158

## Description

### FIELD OF THE INVENTION

The present invention relates to devices for switching data and, more particularly, to method and apparatus for source learning in multi-path backplane data switches.

### BACKGROUND OF THE INVENTION

Data switches interconnect network devices residing in different parts of a network. Such switches typically include network interface modules having ports supporting external network devices. A conventional backplane used to interconnect network interface modules in such data switches has a common path for all packets between two network interface modules. In the protocol operative in such data switches, the network interface module on the ingress side of the backplane typically propagates inbound packets to all of the other network interface modules. Accordingly, the network interface modules on the egress side of such data switches are typically responsible for individually reviewing the packets and deciding whether or not to "claim" them for forwarding out of the switch.

To assist modules at the egress side in making efficient claiming decisions, the protocol in such switches typically also includes a method and apparatus for dynamically establishing associations between the network interface modules and the external network devices they support. Such associations typically are established in conjunction with propagation of packets over the backplane by having network interface modules on the ingress side review the source addresses in inbound packets and mark the packets from sources that they do not know as "unknown."

The packets marked as unknown are typically claimed by a management interface module, which typically resides on the backplane. In practice, the management interface module is typically used to claim such marked packets and to update the source address/network switching module associations as required. The function on a switch which establishes source address/network interface module associations by reviewing source addresses in inbound packets is often called "source learning."

Due to demands for faster switching, there is an emerging trend in data switches favoring matrix style backplanes having multiple paths between each pair of switching modules, including separate unicast and multicast paths. Certain technical challenges typically arise with such architectures, such as, for example, how to accomplish the source learning function, due to the fact that packets are forwarded over the backplane on different paths between network interface modules. A protocol and architecture should be devised for a multi-path switch which exploits the efficiencies of unicast paths where possible, but still ensures that source address/network interface module associations are established as required to assist the network interface modules in making efficient forwarding decisions.

Therefore, there is a need for a method and apparatus for providing source learning in a data switch having multiple network interface modules and a multi-path backplane.

PCT International Application No. WO 99/00945 (Published 7 January 1999) is directed to a multi-layer distributed network element. The distributed multi-layer network element is intended to deliver Layer 2 (data link layer) wire-sped performance within and across subnetworks, which allows queuing decisions to be based in Layer 3 (network layer) protocol and endstation information combined with Layer 2 topology information. The network element performs packet relay functions using multiple switching subsystems as building blocks coupled to each other to form a larger switch that acts as both a router and a bridge. Each switching subsystem includes a hardware forwarding search engine having a switching element coupled to a forwarding memory and an associated memory. The switching subsystems and their meshed interconnection are intended to allow the network element to scale easily without significantly increasing the storage requirements of each forwarding memory.

### SUMMARY OF THE INVENTION

The above and other objects are solved by the invention as claimed in claims 1, 12, and 22.

In one embodiment of the present invention, a method of source learning in a data switch is provided. The data switch has a plurality of switching modules interconnected over a backplane. The backplane includes a unicast fabric and a multicast fabric. A packet having a source address is received on a first switching module. A memory associated with the first stitching module is looked up to determine if the source address is found in the memory. A source learning indicator for the packet is set if the source address is not found in the memory associated with the first switching module. The packet is transmitted over the backplane. The source address is associated with the first switching module.

In another embodiment of the present invention, a multi-path data switch is provided. The multi-path data switch includes a backplane having a unicast fabric and a multicast fabric and a plurality of switching modules coupled to the backplane. Each switching module includes an associated memory, The multi-path data switch also includes a management interlace module coupled to the multicast fabric of the backplane. The unicast fabric couples each pair of switching modules on a unicast path, the multicast fabric couples the switching modules and the management interface module on a multicast path, and the management interface module receives a packet having a source address from a particular switching module over the multicast path and associates the source address with the particular switching module.

In yet another embodiment of the present invention, an apparatus is provided for packet forwarding in a multi-path data switch having a plurality of switching modules. The apparatus includes: means for checking for each inbound packet whether the packet has a known destination address; means for checking for each inbound packet whether the packet has a known source address; means for forwarding each packet having a known destination address over a switch backplane on a unicast path, unless the packet has an unknown source address; and means for forwarding each packet having a known destination address and an unknown source address over the switching backplane on a multicast path.

### BRIEF DESCRIPTION OF THE DRAWINGS

These and other aspects of the invention can be understood by reference to the following detailed description, taken in conjunction with the accompanying drawings, which are briefly described below.
Figure 1 is a block diagram illustrating a data communication switch with transitioning flow path;
Figure 2 is a block diagram illustrating in more detail a representative network interface module within the switch of Figure 1;
Figure 3 is a flow diagram illustrating a source and destination indexing protocol in the switch according to Figure 1;
Figure 4 is a flow diagram illustrating a path transitioning protocol in the switch according to Figure 1;
Figure 5 is a flow diagram illustrating the unicast receive protocol in the switch according to Figure 1;
Figure 6 is a flow diagram illustrating the multicast receive protocol in the switch according to Figure 1;
Figure 7 is a flow diagram illustrating the management interface protocol in the switch according to Figure 1; and
Figure 8 is a flow diagram illustrating instructions provided to the network interface modules of Figure 7 in further detail.

### DETAILED DESCRIPTION

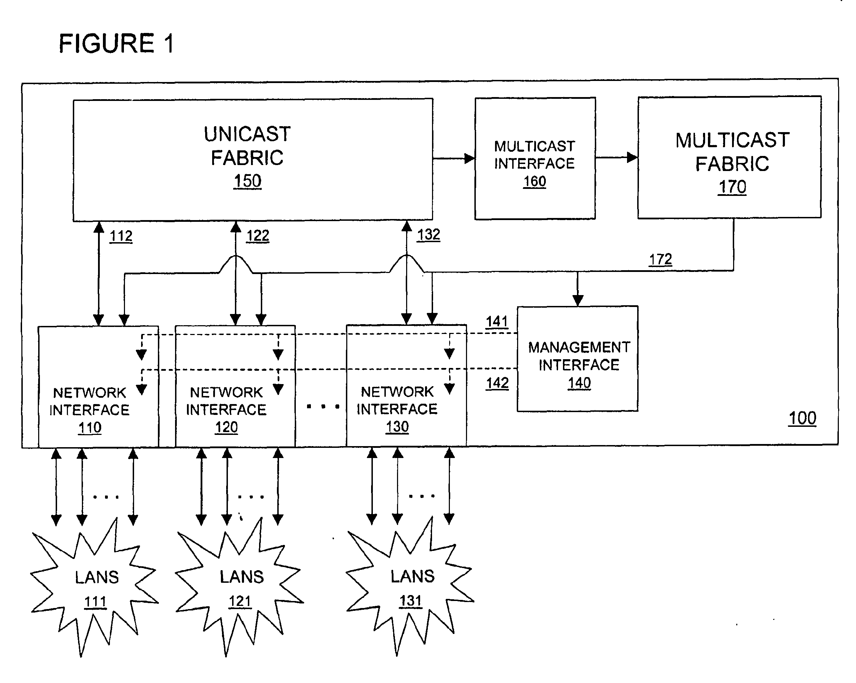

Figure 1 illustrates a switch 100 including network interface modules 110, 120 and 130. The switch may also be referred to as a data switch, as a data communication switch, or as other designations used by those skilled in the art. The network interface modules may also be referred to as switching modules, or as other designations used by those skilled in the art. The network interface modules 110, 120 and 130 are operatively coupled to LANs 111, 121, and 131, respectively. The switch 100 also includes a management interface module 140, a unicast fabric 150, a multicast interface 160 and a multicast fabric 170. The network interface modules 110, 120, and 130 communicate with the unicast fabric 150 via bidirectional signals 112, 122, and 132, and preferably serve to associate routing information with addresses, cellify data packets, and perform other look-up functions.

The unicast fabric 150 preferably is used as the routing link when the source and destination addresses are known. The multicast interface 160 is operatively coupled to the unicast fabric 150 and to the multicast fabric 170. The multicast interface 160 preferably receives an input signal from the unicast fabric 150 and provides an output signal to the multicast fabric 170. The multicast interface 160 may also receive other signals and provide them to the multicast fabric 170. The output signal may include the input signal, the other signals, or a composite of the input signals and some or all of the other signals. The multicast fabric 170 preferably provides the input signal to the network interface modules for source learning when either the source address or the destination address is unknown.

The multicast fabric 170 is operatively coupled to the multicast interface 160, to the management interface module 140, and to the network interface modules 110, 120, and 130. The multicast fabric 170 preferably is used as the routing link when either the source address or the destination address is not known, or when both the source and destination addresses are not known. The management interface module 140 is operatively coupled to the multicast fabric 170 and to the network interface modules 110, 120, and 130. The management interface module 140 preferably is used to discard packets and update addresses as required. It will be appreciated that the multicast interface 160 and the management interface module 140 may share the same logic block.

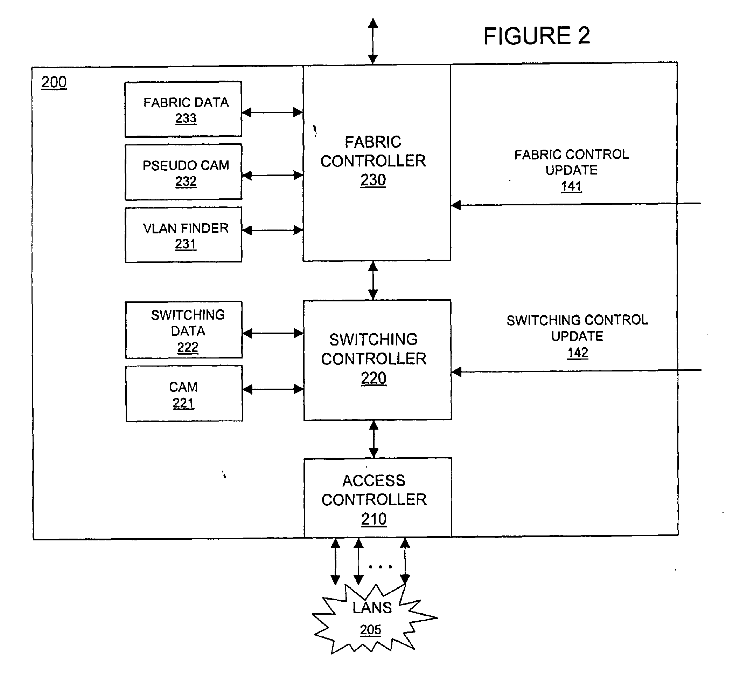

Figure 2 is a block diagram of a network interface module 200, which is representative of all network interface modules in one embodiment of the present invention. The network interface module 200 includes an access controller 210, a switching controller 220, and a fabric controller 230. The access controller 210 preferably includes a simple physical layer device (PHY device), which is coupled to LANs 205. The access controller 210 preferably receives packets off LANs 205 and transmits them to the switching controller 220. The access controller 210 preferably also receives packets from the switching controller 220 and transmits them to the LANs 205.

The switching controller 220 is coupled to modules for facilitating flow integrity, including a switching data module 222 and a content addressable memory (CAM) 221. The switching controller 220 preferably receives packets from the access controller 210, and performs a local CAM lookup using the CAM 221 to retrieve CAM data. The switching controller preferably also performs a switching data lookup by providing CAM data to the switching data module 222 to retrieve switching data. The switching data may also be referred to as forwarding data. Further, the switching controller uses the CAM data and the switching data to process the packets, subjects the packets to flow integrity, and forwards the packets to the fabric controller 230.

The switching controller 220 is also coupled to a switching control update signal 142, which enables the switching controller 220 to update the CAM 221 with further addresses. The fabric controller 230 is coupled to modules for facilitating flow integrity, including a fabric data module 233, a pseudo CAM 232, and a VLAN finder module 231. The fabric controller 230 preferably receives packets from the switching controller 220, and preferably performs a local CAM lookup with either the pseudo CAM 232 or the VLAN finder module 231. The fabric controller preferably also subjects the packets to ingress flow integrity such that the packets are converted into cells, and then preferably forwards those cells out of the network interface module 200.

The fabric controller 230 is also coupled to a fabric control update signal 141 which preferably enables the fabric controller 230 to discard packets for a period of time, which, for example, may have been predetermined. This discard function preferably allows time for the switching controller 220 to update the CAM 221 with a new address. Returning now to Figure 1, the discard function preferably also allows packets from the multicast fabric 170 to arrive at their destination before packets from the unicast fabric 150 are allowed to propagate to the same destination.

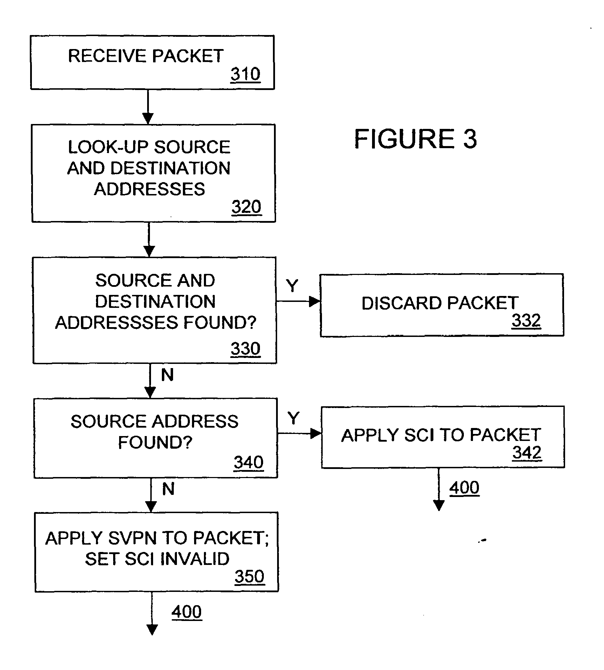

In Figures 3 through 7, flow integrity is described in reference to flow diagrams.

### Source and Destination Conditions:

One embodiment of the present invention is directed to a novel flow integrity technique using multiple flow path backplanes while performing source learning. In a multiple flow path backplane architecture, packets with either an unknown destination address or an unknown source address are transmitted to a multicast fabric for queuing, replication, and forwarding. On the other hand, packets with known destination and source addresses are transmitted to a unicast fabric for queuing and forwarding to a single network interface module on a point-to-point path. Consequently, the switch in this embodiment preferably is capable of processing and routing packets, wherein each packet presents one of the following four properties to the network interface modules: (1) unknown destination and unknown source; (2) unknown destination and known source; (3) known destination and unknown source; and (4). known destination and known source. In the case where the source and destination addresses are known, no source learning typically takes place and therefore flow integrity is not an issue.

### Unknown Destination and Unknown Source:

Referring to Figure 3, a packet is received on a physical port of a network interface module (310), which may be similar to the network interface module 200 of Figure 2. Upon receiving this packet, a look-up operation preferably is performed to find source and destination addresses (320). Unless both the source and destination addresses are found (330), another query preferably is performed, as is the case here, to see if just the source address is found (340). If the source address is not found (340), as is the case here, a source virtual port number (SVPN) preferably is applied to the packet, and a source CAM index (SCI) preferably is set as invalid (350).

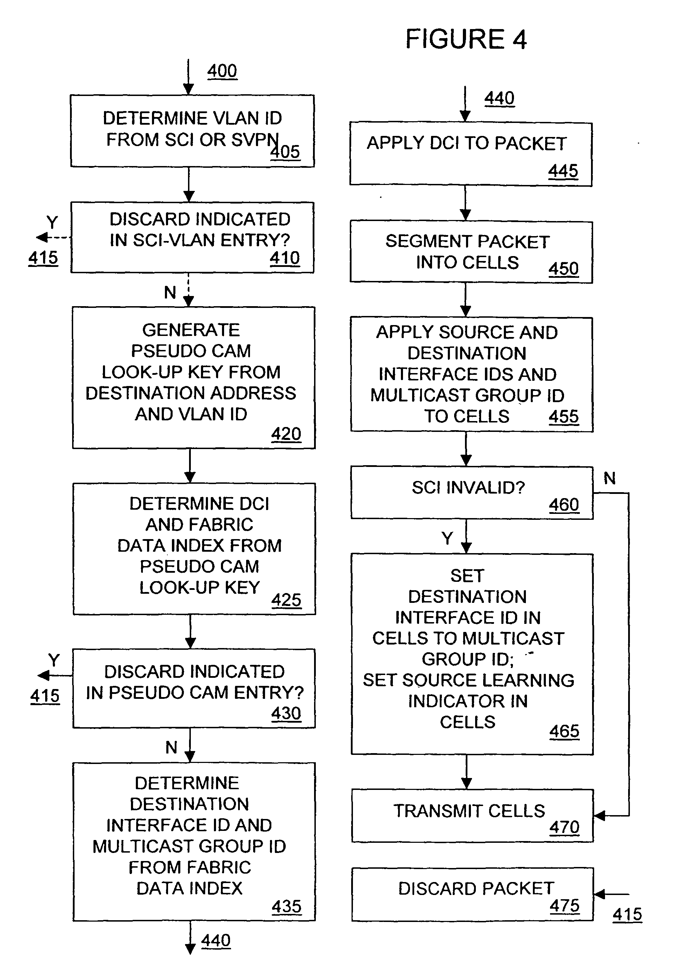

Referring to Figure 4, the packet preferably is operated on to determine its virtual local area network (VLAN) identification (ID) from the SCI or SVPN (405). In this case, the VLAN ID preferably is determined from the SVPN since the SCI has been set as invalid. Next, an SCI-VLAN entry is looked for in the VLAN finder module using the VLAN ID to determine whether a discard indicator is set in the SCI-VLAN entry (410). The setting of the discard indicator in the SCI-VLAN entry preferably indicates that the packet is from the network device whose address is undergoing source learning. If the discard indicator is set (415), the packet preferably is discarded (475), and packets from the same network device preferably are discarded until the discard indicator is no longer set.

Under conditions here, the discard indicator is not set and, as a result, the packet preferably is not discarded. A pseudo CAM look-up key preferably is generated from the destination address and the VLAN ID (420). The pseudo CAM look-up key preferably is used to determine a destination CAM index (DCI) and a fabric data index (FDI) (425). Since the destination address is unknown in this case, a default destination CAM index (DCI) preferably is used.

The pseudo CAM look-up key preferably is also used to retrieve a pseudo CAM entry. If a discard indicator is set in the retrieved pseudo CAM entry (430), the packet preferably is discarded (475). The setting of the discard indicator in the pseudo CAM entry preferably indicates that the packet is destined to the network device whose address is undergoing source learning. Thus, as long as the discard indicator is set, all packets destined to the same network device preferably are discarded. The discard indicator is not set in the pseudo CAM entry in this case, and the packet preferably is not discarded. The FDI preferably is used to determine a destination interface ID and a multicast group ID (435).

Following this, the DCI preferably is applied to the packet (445). Since the destination address is unknown in this case, the DCI preferably has been set as default, which preferably instructs a flood of the network interface modules. After the DCI is applied to the packets, the packets preferably are segmented into cells (450). The cells preferably are then given a source interface ID, the destination interface ID, and the multicast group ID (455). In this case, before the cells are transmitted (470). over the multicast fabric, the destination interface ID preferably is set to the multicast group ID and a source learning indicator preferably is set in the cells (465) since the SCI is invalid(460).

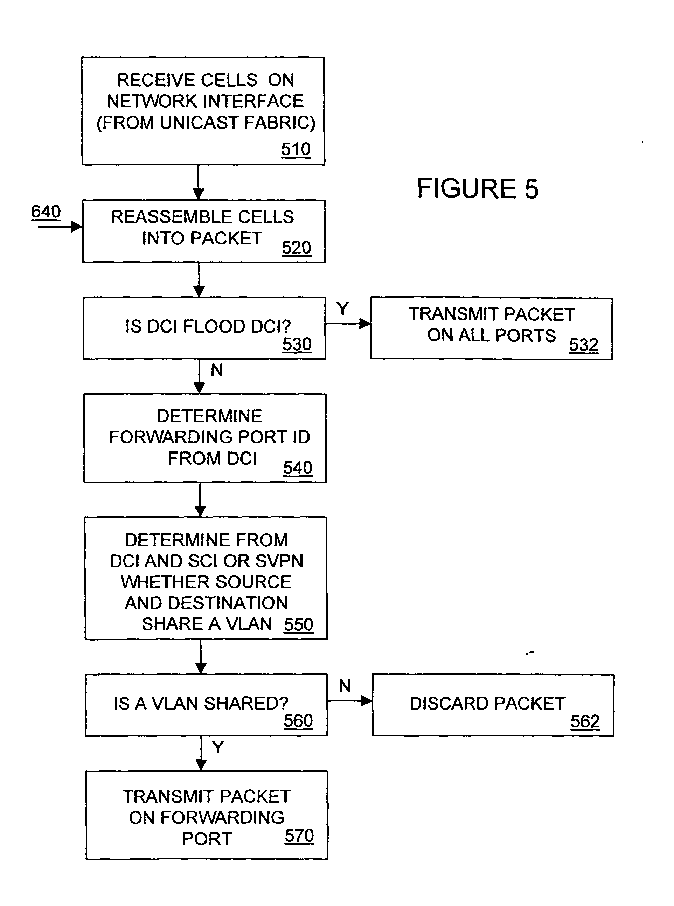

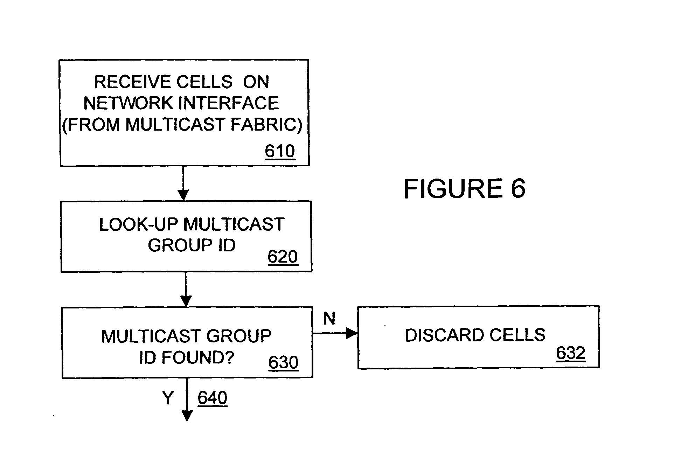

Referring to Figure 6, on receipt of the cells from the multicast fabric (610), the network interface module preferably performs a look-up operation of the multicast group ID (620) to determine whether or not to transmit the cells, i.e., the packet, out of its ports. If the multicast group ID is found (630), the cells preferably are reassembled (520) into the packet as illustrated in Figure 5. If the DCI indicates flood (530), as is the case here, the packet preferably is transmitted out of all ports (532). For example, the packets preferably flood all ports of the network interface module if the DCI is the default DCI.

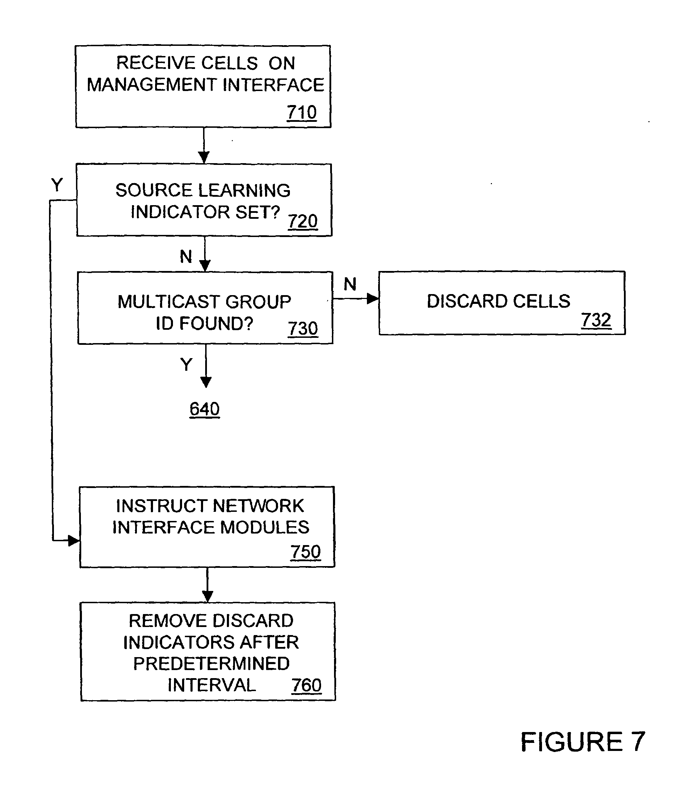

When the network interface modules receive the transmitted cells (610) as illustrated in Figure 6, the management interface module preferably also receives the transmitted cells (710) as illustrated in Figure 7. Once the cells have been received by the management interface module, an operation preferably is performed to determine if the source learning indicator is set (720). In this case, the source learning indicator has been set and, as such, the management interface module preferably instructs the network interface modules to perform a number of functions (750) including but not limited to the following.

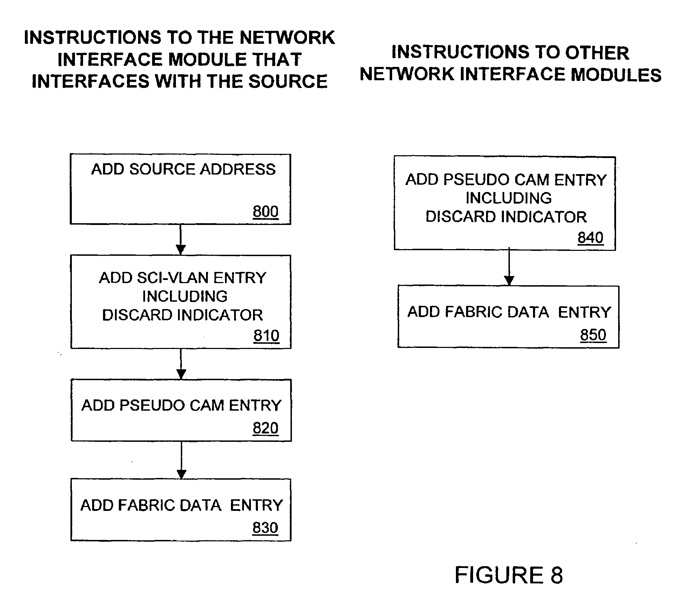

The instructions to perform these functions illustrated in Figure 8 are described in reference to the network interface module 200 of Figure 2 as the network interface module that interfaces with the network device whose address is undergoing source learning. However, the description of the functions are broadly applicable to any network interface module that interfaces with such network device, such as, for example, the network interface module 110, 120 or 130 of Figure 1.

First, the switching controller 220 coupled to the network device whose address is undergoing source learning preferably is instructed by the switching control update signal 142 to add a source address of the network device to the CAM 221 (800). Second, the fabric controller 230 preferably is instructed by the fabric control update signal 141 to add a SCI-VLAN entry including a discard indicator to the VLAN Finder Module 231 (810). The discard indicator preferably causes the fabric controller 230 to discard packets from the network device whose address is undergoing source learning for a period, which, for example, may have been predetermined. In other embodiments, the period for discarding packets may be dynamically determined. Third and fourth, the management interface module preferably instructs the fabric controller 230 using the fabric control update signal 141 to add a pseudo CAM entry to the pseudo CAM 232 (820) and a fabric data entry (830) to the fabric data module 233, respectively.

Fifth, the management interface module preferably instructs the network interface modules that are not coupled to the network device whose address is undergoing source learning to add a pseudo CAM entry including a discard indicator to their respective pseudo CAMs using their respective fabric control update signals (840). The discard indicator preferably causes the respective fabric controllers of these network interface modules to discard packets destined to the network device whose address is undergoing source learning. Sixth, the management interface module preferably instructs the respective fabric controllers of the network interface modules that are not interfacing with the network device whose address is undergoing source learning to add a fabric data entry to their respective fabric data modules (850).

Once the discard conditions are indicated in the network interface modules for packets associated with a particular network device, the discard conditions preferably are removed after an interval passes to ensure that all the packets associated with that network device clear the multicast fabric. Here, the interval, for example, may have been predetermined. After the discard conditions are removed, the packets associated with that network device preferably are allowed to flow over the unicast fabric since both the destination and source addresses are now known to the switch.

### Unknown Destination and Known Source:

Referring to Figure 3, a packet is received on a physical port of a network interface module (310), which may be similar to the network interface module 200 of Figure 2. Upon receiving this packet, a look-up operation preferably is performed to find source and destination addresses (320). Unless both the source and destination addresses are found (330), another query preferably is performed, as is the case here, to see if just the source address is found (340). If the source address is found (340), as is the case here, the packet preferably is outputted (400) with the source CAM index (SCI) applied (342).

Referring to Figure 4, the packet (400) preferably is operated on to determine its virtual local area network (VLAN) identification (ID) from the SCI or SVPN (405). In this case, the VLAN ID preferably is determined from the SCI since the source address is known. Next, an SCI-VLAN entry is looked for in the VLAN finder module using the VLAN ID to determine whether a discard indicator is set in the SCI-VLAN entry (410). If the discard indicator is set (415), the packet preferably is discarded (475), and packets from the same network device as the packet preferably are discarded until the discard indicator is no longer set.

Under conditions here, the discard indicator is not set and, as a result, the packet preferably is not discarded. A pseudo CAM look-up key preferably is generated from the destination address and the VLAN ID (420). The pseudo CAM look-up key preferably is used to determine a destination CAM index (DCI) and a fabric data index (FDI) (425). Since the destination address is unknown in this case, a default destination CAM index (DCI) preferably is used.

The pseudo CAM look-up key preferably is also used to retrieve a pseudo CAM entry. If a discard indicator is set in the retrieved pseudo CAM entry (430), the packet preferably is discarded (475). As long as the discard indicator is set, all packets destined to the same network device as the packet preferably are discarded. The discard indicator is not set in the pseudo CAM entry in this case, and the packet preferably is not discarded. The FDI preferably is used to determine a destination interface ID and a multicast group ID (435).

Following this, the DCI preferably is applied to the packet (445). Since the destination address is unknown in this case, the DCI preferably has been set as default, which preferably instructs a flood of the network interface modules. After the DCI is applied to the packets, the packets preferably are segmented into cells (450). Prior to being transmitted (470), the cells preferably are given a source interface ID, the destination interface ID, and the multicast group ID (455).

Referring to Figure 6, on receipt of the cells from the multicast fabric (610), the network interface module preferably performs a look-up operation of the multicast group ID (620) to determine whether or not to transmit the cells, i.e., the packet, out of its ports. If the multicast group ID is found (630), the cells preferably are reassembled (520) into the packet as illustrated in Figure 5. If the DCI indicates flood (530), as is the case here, the packet preferably is transmitted out of all ports (532).

When the network interface modules receive the transmitted cells (610) as illustrated in Figure 6, the management interface module preferably also receives the transmitted cells (710) as illustrated in Figure 7. Once the cells have been received by the management interface module, an operation preferably is performed to determine if the source learning indicator is set (720). In this case, the source learning indicator has not been set and, as such, the management interface module preferably queries to see if the multicast group ID is found (730). In this case, the multicast group ID is found and the packet preferably is reassembled and processed (520) for receipt as illustrated in Figure 5. Since the default DCI instructs the network interface module to flood (530) in this case, the packet is transmitted out of all ports (532) of the network interface module.

### Known Destination and Unknown Source:

Referring to Figure 3, a packet is received on a physical port of a network interface module (310), which may be similar to the network interface module 200 of Figure 2. Upon receiving this packet, a look-up operation preferably is performed to find source and destination addresses (320). Unless both the source and destination addresses are found (330), another query preferably is performed, as is the case here, to see if just the source address is found (340). If the source address is not found (340), as is the case here, a source virtual port number (SVPN) preferably is applied to the packet, and a source CAM index (SCI) preferably is set as invalid (350).

Referring to Figure 4, the packet preferably is operated on to determine its virtual local area network (VLAN) identification (ID) from the SCI or SVPN (405). In this case, the VLAN ID preferably is determined from the SVPN since the SCI has been set as invalid. Next, an SCI-VLAN entry is looked for in the VLAN finder module using the VLAN ID to determine whether a discard indicator is set in the SCI-VLAN entry (410). If the discard indicator is set (415), the packet preferably is discarded (475), and packets from the same network device as the packet preferably are discarded until the discard indicator is no longer set.

Under conditions here, the discard indicator is not set and, as a result, the packet preferably is not discarded. A pseudo CAM look-up key preferably is generated from the destination address and the VLAN ID (420). The pseudo CAM look-up key preferably is used to determine a destination CAM index (DCI) and a fabric data index (FDI) (425). Since the destination address is known in this case, a default destination CAM index (DCI) preferably is not used.

The pseudo CAM look-up key preferably is also used to retrieve a pseudo CAM entry. If a discard indicator is set in the retrieved pseudo CAM entry (430), the packet preferably is discarded (475). As long as the discard indicator is set, all packets destined to the same network device as the packet preferably are discarded. The discard indicator is not set in the pseudo CAM entry in this case, and, the FDI preferably is used to determine a destination interface ID and a multicast group ID (435).

Following this, the DCI preferably is applied to the packet (445) and the packets preferably are segmented into cells (450). The cells preferably are then given a source interface ID, the destination interface ID, and the multicast group ID (455). In this case, before the cells are transmitted (470) over the multicast fabric, the destination interface ID preferably is set to the multicast group ID and a source learning indicator preferably is set in the cells (465) since the SCI is invalid.

Referring to Figure 6, on receipt of the cells from the multicast fabric (610), the network interface module preferably performs a look-up operation of the multicast group ID (620) to determine whether or not to transmit the cells, i.e., the packet, out of its ports. If the multicast group ID is found (630), the cells preferably are reassembled into the packet (520) as illustrated in Figure 5. If the DCI indicates flood (530), the packet preferably is transmitted of all ports (532). In this case, since the destination address is known, the default DCI preferably is not used, and thus the packet preferably is not transmitted out of all ports.

Instead, a forwarding port ID preferably is determined from the DCI (540). Then the DCI and the SVPN preferably are used to determine whether or not the source and destination devices of the packet share a virtual LAN (VLAN) (550). If a VLAN is shared (560), the packet preferably is transmitted on the forwarding port identified by the forwarding port ID (570). If, however, the VLAN is not shared by the source and destination devices, the packet preferably is discarded (562).

When the network interface modules receive the transmitted cells (610) as illustrated in Figure 6, the management interface module preferably also receives the transmitted cells (710) as illustrated in Figure 7. Once the cells have been received by the management interface module, an operation preferably is performed to determine if the source learning indicator is set (720). In this case, the source learning indicator has been set and, as such, the management interface module preferably instructs the network interface modules to perform a number of functions (750) including but not limited to the following.

The instructions to perform these functions illustrated in Figure 8 are described in reference to the network interface module 200 of Figure 2 as the network interface module that interfaces with the network device whose address is undergoing source learning. However, the description of the functions are broadly applicable to any network interface module that interfaces with such network device such as, for example, the network interface module 110, 120 or 130 of Figure 1.

First, the switching controller 220 coupled to the network device whose address is undergoing source learning preferably is instructed by the switching control update signal 142 to add a source address of the network device to the CAM 221 (800). Second, the fabric controller 230 preferably is instructed by the fabric control update signal 141 to add a SCI-VLAN entry including a discard indicator to the VLAN Finder Module 231 (810). The discard indicator preferably causes the fabric controller 230 to discard packets from the network device whose address is undergoing source learning for a period, which, for example, may have been predetermined. In Other embodiments, the period for discarding packets may be dynamically determined. Third and fourth, the management interface module preferably instructs the fabric controller 230 using the fabric control update signal 141 to add a pseudo CAM entry to the pseudo CAM 232 (820) and a fabric data entry (830) to the fabric data module 233, respectively.

Fifth, the management interface module preferably instructs the network interface modules that are not coupled to the network device whose address is undergoing source learning to add a pseudo CAM entry including a discard indicator to their respective pseudo CAMs using their respective fabric control update signals (840). The discard indicator preferably causes the respective fabric controllers of these network interface modules to discard packets destined to the network device whose address is undergoing source learning. Sixth, the management interface module preferably instructs the respective fabric controllers of the network interface modules that are not interfacing with the network device whose address undergoing source learning to add a fabric data entry to their respective fabric data modules (850).

Once the discard conditions are indicated in the network interface modules for packets associated with a particular network device, the discard conditions preferably are removed after an interval passes to ensure that all packets associated with that network device clear the multicast fabric. Here, the interval, for example, may have been predetermined. After the discard conditions are removed, the packets associated with that network device preferably are allowed to flow over the unicast fabric since both the destination and source addresses are now known to the switch.

### Known Destination and Known Source:

Referring to Figure 3, a packet is received on a physical port of a network interface module (310), which may be similar to the network interface module 200 of Figure 2. Upon receiving this packet, a look-up operation preferably is performed to find source and destination addresses (320).

There are two different cases here, depending on whether the source and destination devices are local to the same network interface module or not. If the destination and the source devices are coupled to the same network interface module, the source and destination addresses are found (330) and the packet is discarded (332) from being sent to other network interface modules over the fabrics.

If the source and destination devices are not coupled to the same network interface module, the source address is typically locally known (340) but the destination address may not be locally known. A source CAM index (SCI) preferably is applied (342) to the packet.

Referring to Figure 4, the packet preferably is operated on to determine its virtual local area network (VLAN) identification (ID) from the SCI or SVPN (405). In this case, the VLAN ID preferably is determined from the SCI since the source address is known. Next, an SCI-VLAN entry is looked for in the VLAN finder module using the VLAN ID to determine whether a discard indicator is set in the SCI-VLAN entry (410). The setting of the discard indicator in the SCI-VLAN entry preferably indicates that the packet is from the network device whose address is undergoing source learning.

Since both the source and destination addresses are known in this case, no source learning associated with the packet preferably takes place, and thus the discard indicator preferably is not set. Then a pseudo CAM look-up key preferably is generated from the destination address and the VLAN ID (420). Next, the DCI and FDI preferably are determined from the pseudo CAM look-up key (425). Since the destination address is known in this case, a default destination CAM index (DCI) preferably is not used.

The pseudo CAM look-up key preferably is also used to retrieve a pseudo CAM entry. If a discard indicator is set in the retrieved pseudo CAM entry (430), the packet preferably is discarded (475). The setting of the discard indicator in the pseudo CAM entry preferably indicates that the packet is destined to the network device whose address is undergoing source learning. In this case, both the source and destination address are known for the packet, and thus no source learning associated with the packet preferably takes place, and the discard indicator preferably is not set.

Next, the FDI preferably is used to determine a destination interface ID and a multicast group ID (435). Thereafter, the DCI preferably is applied to the packet (445) and then the packets are segmented into cells (450). Prior to being transmitted (470), the cells preferably are given a source interface ID, the destination interface ID, and the multicast group ID (455). Since both the source and the destination addresses are known, the multicast group ID in this case preferably contains a single destination. Therefore, the cells preferably are not forwarded to the multicast fabric but preferably are forwarded to the unicast fabric.

Referring to Figure 5, on receipt of the cells from the unicast fabric (510), the cells preferably are reassembled into the packet (520). Next, a test preferably is performed to determine if the DCI has been set to flood (530). In this, the DCI preferably has not been set to flood since both the source and destination addresses are known and the unicast fabric has been used. Therefore, the packet is not transmitted out of all ports.

Instead, a forwarding port ID preferably is determined from the DCI (540). Then the DCI and the SCI preferably are used to determine whether or not the source and destination devices of the packet share a virtual LAN (VLAN) (550). If a VLAN is shared (560), the packet preferably is transmitted on the forwarding port identified by the forwarding port ID (570). If, however, the VLAN is not shared by the source and destination devices, the packet preferably is discarded (562).

It will be appreciated by those of ordinary skill in the art that the invention can be embodied in other specific forms without departing from the scope hereof. The present description is therefore considered in all respects to be illustrative and not restrictive. The scope of the invention is indicated by the appended claims, and all changes that come within the meaning and range of equivalents thereof are intended to be embraced therein.

## Claims

1. A method of source learning in a data switch (100) having a plurality of switching modules (110,120,130,200) interconnected over a backplane, and the backplane including a unicast fabric (150) and a multicast fabric (170), the method comprising the steps of:
receiving (310) a packet having a source address on a first switching module;
looking (320) up a memory associated with the first switching module to determine of the source address is found in the memory;
upon determining that the source address is not found in the memory associated with the first switching module, performing the following steps:
providing a source learning indication for the packet;
transmitting the packet over the multicast fabric of the backplane; and
associating the source address with the first switching module.

2. The method of claim 1 further comprising the step of converting the packet into a plurality of cells, wherein the step of transmitting the packet over the backplane includes the step of transmitting the cells over the backplane.

3. The method of claim 1 further comprising discarding the packet if both the source address and a destination address of the packet are found in the memory associate with the first switching module.

4. The method of claim 1 further comprising the step of transmitting, after the source address has been associated with the first switching module, other packets having the same source address over the unicast fabric if their respective destination addresses are found in the memory.

5. The method of claim 1 wherein the step of associating the source address with the first switching module includes the step of adding the source address to the memory associated with the first switching module.

6. The method of claim 5 wherein the step of associating the source address with the first switching module further includes the step of adding the source address to a memory associated with each of other switching modules.

7. The method of claim 5 whereon the memory associated with the first switching module includes a content addressable memory, CAM, included in the first switching module.

8. The method of claim 7 further comprising the steps of:
determining a VLAN ID from a source CAM index, SCI, of the source address if the source address has been found; and
determining the VLAN ID from a source victual port number, SVPN, if the source address has not been found.

9. The method of claim 1 wherein the first switching module is disabled from transmitting other packets having the same source address as the packet over the backplane while the source address is bering associated with the first switching module.

10. The method of claim 1 wherein other switching modules are temporarily disabled from transmitting other packets having the source address of the packet as a destination address over the backplane.

11. The method of claim 1 wherein other switching modules are disabled from transmitting other packets having the source address of the packet as a destination address over the backplane while the source address is being associated with the first switching module.

12. A multi-path data switch (100) comprising:
a backplane including a unicast fabric (150) and a multicast fabric (170);
a plurality of switching modules (110,120,130,200) coupled to the backplane, each switching module including an associated memory; and
a management interface module (140) coupled to the multicast fabric of the backplane,
wherein the unicast fabric is adapted to couple each pair of switching modules on a unicast path, the multicast fabric is adapted to couple the: switching modules and the management interface module on a multicast path, and the management interface module is adapted to receive a packet having a source address from a particular switching module over the multicast path and is adapted to associate the source address with the particular switching module if the source, address is not found in the memory associated with the particular switching module.

13. The multipath data switch of claim 12 wherein the management interface module is adapted to associate the source address with the particular stitching module by instructing the particular switching module to store the source address in its associated memory.

14. The multi-path data switch of claim 13 wherein the management interface module is adapted to associate the source address with the particular switching module by instructing all other switching modules to store the source address in their respectives associated memories.

15. The multi-path data switch of claim 12 wherein the management interface module is adapted to associate the source address with the particular switching module if a source learning indicator of the packet has been set.

16. The multi-path data switch of claim 15 being adapted so that the packet is converted intro cells prior to transmission over the multicast path, and wherein the management interface module is adapted to associate the source address with the particular switching module if the source learning indicator of the cells has been set.

17. The multi-path data switch of claim 15 being adapted to that the source learning indicator is set if the source address of the packet is unknown.

18. The multi-path data switch of claim 12 being adapted so that the particular switching module is temporarily disabled from transmitting other packets halving the same source address as the packet over the backplane.

19. The multi-path data switch of claim 12 being adapted so that the particular switching module is disabled from transmitting other packets having the same source address as the packet over the backplane while the source address is being associated with the particular switching module.

20. The multi-path data switch of claim 12 being adapted so that all other switching modules are disabled from transmitting other packets having the source address as a destination address over the backplane while the source address is being associated with the particular switching module.

21. The multi-path data switch of claim 12 being adapted so that, after the source address has been associated with the particular switching module, the particular switching module transmits all other packets having the same source address over the unicast fabric if their respectives destination addresses are found in the memory associated with the particular switching module.

22. An apparatus for packet forwarding in a multi-path data switch (100) heaving a plurality of switching modules (110,120.130,200), the apparatus comprising:
means for checking for each inbound packet whether the packet has a known destination address;
means for checking for each inbound packet whether the packet has a known source address:
means for forwarding each packet halving a know destination address over a switch backplane on a unicast path (150), unless the packet has an unknown source address; and
means for forwarding each packet having a known destination address and an unknown source address over the switching backplane on a multicast path (170).

23. The apparatus of claim -22 further comprising means for source learning, wherein an unknown source address of a packet is associated with a particular switching module that receives the packet from a network.

24. The apparatus of claim 23 wherein the means for source learning further comprises means for storing the source address, and the means for storing the source address stores the source address in a memory of the particular switching module.

25. The apparatus of claim 24 wherein the means for storing the source address stores the source address in respective memories of all other switching modules.

26. The apparatus of claim 23 wherein the means for source learning includes means for temporarily disabling the particular switching module from transmitting other packets having the same source address as the packet over the backplane.

27. The apparatus of claim 23 wherein the means for source learning includes means for disabling the particular switching module from transmitting other packets having the same source address as the packet over the backplane while the source address is being associated with the particular switching module.

28. The apparatus of claim 23 wherein the means for source learning includes means for temporarily disabling other switching modules from transmitting packets having the source address as a destination address over the backplane.

29. The apparatus of claim 23 whereon the means for source learning includes means for disabling other switching modules from transmitting packets having the source address as a destination address over the backplane while the source address is being associated with the particular switching module.

## Patentansprüche

1. Ein Verfahren zum Source-Learning in einer Datenvermittlungsvorrichtung (100) mit einer Mehrzahl von Schaltmodulen (110,120,130,200), welche über eine Rückwandplatine miteinander verbunden sind, wobei die Rückwandplatine ein Unicast-Koppelfeld (150) und ein Multicast-Koppelfeld (170) umfasst, wobei das Verfahren die folgenden Schritte umfasst:
Empfangen (310) eines Paketes mit einer Quelladresse auf einem ersten Schaltmodul;
Nachsehen (320) in einem dem ersten Schaltmodul zugeordneten Speicher, um zu ermitteln, ob die Quelladresse in dem Speicher gefunden wird;
nach Ermitteln, dass die Quelladresse nicht in dem dem ersten Schaltmodul zugeordneten Speicher gefunden wird, Ausführen der folgenden Schritte:
Bereitstellen einer Source-Learning-Indikation für das Paket;
Übertragen des Paketes über das Multicast-Koppelfeld der Rückwandplatine; und
Zuordnen der Quelladresse an das erste Schaltmodul.

2. Das Verfahren nach Anspruch 1, weiterhin umfassend den Schritt des Umwandelns des Paketes in eine Mehrzahl von Zellen, wobei der Schritt des Übertragens des Paketes über die Rückwandplatine den Schritt des Übertragens der Zellen über die Rückwandplatine umfasst.

3. Das Verfahren nach Anspruch 1, weiterhin umfassend den Schritt des Verwerfens des Paketes, wenn sowohl die Quelladresse als auch die Zieladresse des Paketes in dem dem ersten Schaltmodul zugeordneten Speicher gefunden werden.

4. Das Verfahren nach Anspruch 1, weiterhin umfassend den Schritt des Übertragens, nachdem die Quelladresse dem ersten Schaltmodul zugeordnet wurde, von weiteren Paketen mit derselben Quelladresse über das Unicast-Koppelfeld, wenn deren jeweilige Zieladressen im Speicher gefunden werden.

5. Das Verfahren nach Anspruch 1, wobei der Schritt des Zuordnens der Quelladresse an das erste Schaltmodul den Schritt des Eintragens der Quelladresse in dem dem ersten Schaltmodul zugeordneten Speicher umfasst.

6. Das Verfahren nach Anspruch 5, wobei der Schritt des Zuordnens der Quelladresse an das erste Schaltmodul weiterhin den Schritt des Eintragens der Quelladresse in einem einem jeden der anderen Schaltmodule zugeordneten Speicher umfasst.

7. Das Verfahren nach Anspruch 5, wobei der dem ersten Schaltmodul zugeordnete Speicher einen in dem ersten Schaltmodul enthaltenen Assoziativspeicher, CAM, umfasst.

8. Das Verfahren nach Anspruch 7, weiterhin umfassend die folgenden Schritte:
Ermitteln einer VLAN-ID aus einem CAM-Quellindex, SCI, der Quelladresse, wenn die Quelladresse gefunden wurde; und
Ermitteln der VLAN-ID aus der Nummer eines virtuellen Quellports, SVPN, wenn die Quelladresse nicht gefunden wurde.

9. Das Verfahren nach Anspruch 1, wobei das erste Schaltmodule an der Übertragung anderer Pakete mit derselben Quelladresse wie das Paket über die Rückwandplatine gehindert wird, solange die Quelladresse mit dem ersten Schaltmodul assoziiert ist.

10. Das Verfahren nach Anspruch 1, wobei andere Schaltmodule vorübergehend an der Übertragung anderer Pakete mit der Quelladresse des Paketes als eine Zieladresse über die Rückwandplatine gehindert werden.

11. Das Verfahren nach Anspruch 1, wobei andere Schaltmodule an der Übertragung anderer Pakete mit der Quelladresse des Paketes als Zieladresse über die Rückwandplatine gehindert werden, solange die Quelladresse mit dem ersten Schaltmodul assoziiert ist.

12. Eine Mehrweg-Datenvermittlungsvorrichtung (100), umfassend:
Eine Rückwandplatine mit einem Unicast-Koppelfeld (150) und einem Multicast-Koppelfeld (170);
eine Mehrzahl von Schaltmodulen (110, 120, 130, 200), welche an die Rückwandplatine gekoppelt sind, wobei jedes Schaltmodul einen zugeordneten Speicher umfasst; und
ein Verwaltungsschnittstellenmodul (140), welches an das Multicast-Koppelfeld der Rückwandplatine gekoppelt ist,
wobei das Unicast-Koppelfeld dazu ausgelegt ist, jedes Schaltmodul-Paar auf einem Unicast-Pfad zu koppeln, wobei das Multiicast-Koppelfeld dazu ausgelegt ist, die Schaltmodule und das Verwaltungsschnittstellenmodul auf einem Multicast-Pfad zu koppeln, und das Verwaltungsschnittstellenmodul dazu ausgelegt ist, ein Paket mit einer Quelladresse von einem bestimmten Schaltmodul über den Multicast-Pfad zu empfangen, und dazu ausgelegt ist, die Quelladresse mit dem bestimmten Schaltmodul zu assoziieren, wenn die Quelladresse nicht in dem dem bestimmten Schaltmodul zugeordneten Speicher gefunden wird.

13. Die Mehrweg-Datenvermittlungsvorrichtung nach Anspruch 12, wobei das Verwaltungsschnittstellenmodul dazu ausgelegt ist, die Quelladresse mit dem bestimmten Schaltmodul zu assoziieren, indem es das bestimmte Schaltmodul anweist, die Quelladresse in seinem zugeordneten Speicher zu speichern.

14. Die Mehrweg-Datenvermittlungsvorrichtung nach Anspruch 13, wobei das Verwaltungsschnittstellenmodul dazu ausgelegt ist, die Quelladresse mit dem bestimmten Schaltmodul zu assoziieren, indem es alle anderen Schaltmodule anweist, die Quelladresse in deren jeweiligen zugeordneten Speichern zu speichern.

15. Die Mehrweg-Datenvermittlungsvorrichtung nach Anspruch 12, wobei das Verwaltungsschnittstellenmodul dazu ausgelegt ist, die Quelladresse mit dem bestimmten Schaltmodul zu assoziieren, wenn ein Source-Learning-Indikator des Paketes gesetzt wurde.

16. Die Mehrweg-Datenvermittlungsvorrichtung nach Anspruch 15, derart gestaltet, dass das Paket vor der Übertragung über den Multicast-Pfad in Zellen umgewandelt wird, und wobei das Verwaltungsschnittstellenmodul dazu ausgelegt ist, die Quelladresse mit dem bestimmten Schaltmodul zu assoziieren, wenn der Source- Learning-Indikator der Zellen gesetzt wurde.

17. Die Mehrweg-Datenvermittlungsvorrichtung nach Anspruch 15, derart gestaltet, dass der Source-Learning-Indikator gesetzt wird, wenn die Quelladresse des Paketes unbekannt ist.

18. Die Mehrweg-Datenvermittlungsvorrichtung nach Anspruch 12, derart gestaltet, dass das bestimmte Schaltmodul vorübergehend an der Übertragung anderer Pakete mit derselben Quelladresse wie das Paket über die Rückwandplatine gehindert wird.

19. Die Mehrweg-Datenvermittlungsvorrichtung nach Anspruch 12, derart gestaltet, dass das bestimmte Schaltmodul an der Übertragung anderer Pakete mit derselben Quelladresse wie das Paket über die Rückwandplatine gehindert wird, solange die Quelladresse mit dem bestimmten Modul assoziiert ist.

20. Die Mehrweg-Datenvermittlungsvorrichtung nach Anspruch 12, derart gestaltet, dass alle anderen Schaltmodule an der Übertragung anderer Pakete mit der Quelladresse als Zieladresse über die Rückwandplatine gehindert werden, solange die Quelladresse mit dem bestimmten Modul assoziiert ist.

21. Die Mehrweg-Datenvermittlungsvorrichtung nach Anspruch 12, derart gestaltet, dass, nachdem die Quelladresse mit dem bestimmten Schaltmodul assoziiert wurde, das bestimmte Schaltmodul alle anderen Pakete mit derselben Quelladresse über das Unicast-Koppelfeld überträgt, wenn deren jeweiligen Zieladressen in dem dem bestimmten Schaltmodul zugeordneten Speicher gefunden werden.

22. Eine Vorrichtung zum Weiterleiten von Paketen in einer Mehrweg-Datenvermittlungsvorrichtung (100) mit einer Mehrzahl von Schaltmodulen (110, 120, 130, 200), wobei die Vorrichtung umfasst:
Mittel zum Prüfen, für jedes eingehende Paket, ob das Paket eine bekannte Zieladresse hat;
Mittel zum Prüfen, für jedes eingehende Paket, ob das Paket eine bekannte Quelladresse hat;
Mittel zum Weiterleiten eines jeden Paketes mit einer bekannten Zieladresse über eine Rückwandplatine auf einem Unicast-Pfad (150), es sei denn, das Paket hat eine unbekannte Quelladresse; und
Mittel zum Weiterleiten eines jeden Paketes mit einer bekannten Zieladresse und einer unbekannten Quelladresse über die Rückwandplatine auf einem Multicast-Pfad (170).

23. Die Vorrichtung nach Anspruch 22, weiterhin umfassend Mittel zum Source-Learning,
wobei eine unbekannte Quelladresse eines Paketes mit einem bestimmten Schaltmodul, welches das Paket von einem Netzwerk empfängt, assoziiert wird.

24. Die Vorrichtung nach Anspruch 23, wobei das Mittel zum Source-Learning weiterhin ein Mittel zum Speichern der Quelladresse umfasst und das Mittel zum Speichern der Quelladresse die Quelladresse in einem Speicher eines bestimmten Schaltmoduls speichert.

25. Die Vorrichtung nach Anspruch 24, wobei das Mittel zum Speichern der Quelladresse die Quelladresse in den jeweiligen Speichern aller anderen Schaltmodule speichert.

26. Die Vorrichtung nach Anspruch 23, wobei das Mittel zum Source-Learning ein Mittel zum vorübergehenden Verhindern, dass das bestimmte Schaltmodul andere Pakete mit derselben Quelladresse wie das Paket über die Rückwandplatine überträgt, umfasst.

27. Die Vorrichtung nach Anspruch 23, wobei das Mittel zum Source-Learning ein Mittel zum Verhindern, dass das bestimmte Schaltmodule andere Pakete mit derselben Quelladresse wie das Paket über die Rückwandplatine überträgt, solange die Quelladresse mit dem bestimmten Schaltmodul assoziiert ist, umfasst.

28. Die Vorrichtung nach Anspruch 23, wobei das Mittel zum Source-Learning ein Mittel zum vorübergehenden Verhindern, dass andere Schaltmodule Pakete mit der Quelladresse als Zieladresse über die Rückwandplatine übertragen, umfasst.

29. Die Vorrichtung nach Anspruch 23, wobei das Mittel zum Source-Learning ein Mittel zum Verhindern, dass andere Schaltmodule Pakete mit der Quelladresse als Zieladresse über die Rückwandplatine übertragen, solange die Quelladresse mit dem bestimmten Schaltmodul assoziiert ist, umfasst.

## Revendications

1. Procédé d'apprentissage de source dans un commutateur de données (100) présentant une pluralité de modules de commutation (110, 120, 130, 200) interconnectés par le biais d'un fond de panier, le fond de panier comprenant une matrice de monodiffusion (150) et une matrice de multidiffusion (170), le procédé comprenant les étapes suivantes :
recevoir (310) un paquet présentant une adresse source sur un premier module de commutation ;
rechercher (320) une mémoire associée au premier module de commutation pour déterminer si l'adresse source est présente dans la mémoire ;
lorsque l'on détermine que l'adresse source n'est pas présente dans la mémoire associée au premier module de commutation, exécuter les étapes suivantes :
fournir une indication d'apprentissage de source au paquet ;
transmettre le paquet par le biais de la matrice de multidiffusion du fond de panier ; et
associer l'adresse source au premier module de commutation.

2. Procédé selon la revendication 1 comprenant en outre l'étape de conversion du paquet en une pluralité de cellules, dans lequel l'étape de transmission du paquet par le biais du fond de panier comprend l'étape de transmission des cellules par le biais du fond de panier.

3. Procédé selon la revendication 1 comprenant en outre l'élimination du paquet si l'adresse source et une adresse de destination du paquet sont présentes dans la mémoire associée au premier module de commutation.

4. Procédé selon la revendication 1 comprenant en outre l'étape de transmission, après que l'adresse source a été associée au premier module de commutation, d'autres paquets présentant la même adresse source par le biais de la matrice de monodiffusion si leurs adresses de destination respectives sont présentes dans la mémoire.

5. Procédé selon la revendication 1 dans lequel l'étape d'association de l'adresse source avec le premier module de commutation comprend l'étape d'ajout de l'adresse source à la mémoire associée au premier module de commutation.

6. Procédé selon la revendication 5 dans lequel l'étape d'association de l'adresse source avec le premier module de commutation comprend en outre l'étape d'ajout de l'adresse source à une mémoire associée à chacun des autres modules de commutation.

7. Procédé selon la revendication 5 dans lequel la mémoire associée au premier module de commutation comprend une mémoire adressable par le contenu, CAM, incluse dans le premier module de commutation.

8. Procédé selon la revendication 7, comprenant en outre les étapes suivantes :
déterminer un identifiant de VLAN à partir d'un indice CAM source, SCI, de l'adresse source si l'adresse source a été trouvée ; et
déterminer l'identifiant de VLAN à partir d'un numéro de port virtuel source, SVPN, si l'adresse source n'a pas été trouvée.

9. Procédé selon la revendication 1 dans lequel le premier module de commutation ne peut pas transmettre d'autres paquets présentant la même adresse source que le paquet par le biais du fond de panier alors que l'adresse source est associée au premier module de commutation.

10. Procédé selon la revendication 1 dans lequel d'autres modules de commutation sont temporairement dans l'incapacité de transmettre d'autres paquets présentant l'adresse source du paquet comme une adresse de destination par le biais du fond de panier.

11. Procédé selon la revendication 1 dans lequel d'autres modules de commutation ne peuvent pas transmettre d'autres paquets présentant l'adresse source du paquet comme une adresse de destination par le biais du fond de panier alors que l'adresse source est associée au premier module de commutation.

12. Commutateur de données à trajets multiples (100) comprenant :
un fond de panier comprenant une matrice de monodiffusion (150) et une matrice de multidiffusion (170) ;
une pluralité de modules de commutation (110, 120, 130, 200) couplés au fond de panier, chaque module de commutation comprenant une mémoire associée ; et
un module d'interface de gestion (140) couplé à la matrice de multidiffusion du fond de panier,
dans lequel la matrice de monodiffusion est adaptée pour coupler chaque paire de modules de commutation sur un trajet de monodiffusion, la matrice de multidiffusion est adaptée pour coupler les modules de commutation et le module d'interface de gestion sur un trajet de multidiffusion, et le module d'interface de gestion est adapté pour recevoir un paquet présentant une adresse source d'un module de commutation particulier par le biais du trajet de multidiffusion et est adapté pour associer l'adresse source au module de commutation particulier si l'adresse source n'est pas présente dans la mémoire associée au module de commutation particulier.

13. Commutateur de données à trajets multiples selon la revendication 12 dans lequel le module d'interface de gestion est adapté pour associer l'adresse source au module de commutation particulier en indiquant au module de commutation particulier d'enregistrer l'adresse source dans sa mémoire associée.

14. Commutateur de données à trajets multiples selon la revendication 13 dans lequel le module d'interface de gestion est adapté pour associer l'adresse source au module de commutation particulier en indiquant à tous les autres modules de commutation d'enregistrer l'adresse source dans leurs mémoires associées respectives.

15. Commutateur de données à trajets multiples selon la revendication 12 dans lequel le module d'interface de gestion est adapté pour associer l'adresse source au module de commutation particulier si un indicateur d'apprentissage de source du paquet a été défini.

16. Commutateur de données à trajets multiples selon la revendication 15 étant adapté de sorte que le paquet soit converti en cellules avant la transmission par le biais du trajet de multidiffusion, et dans lequel le module d'interface de gestion est adapté pour associer l'adresse source au module de commutation particulier si l'indicateur d'apprentissage de source des cellules a été défini.

17. Commutateur de données à trajets multiples selon la revendication 15 adapté de sorte que l'indicateur d'apprentissage de source soit défini si l'adresse source du paquet est inconnue.

18. Commutateur de données à trajets multiples selon la revendication 12 adapté de sorte que le module de commutation particulier soit temporairement dans l'incapacité de transmettre d'autres paquets présentant la même adresse source que le paquet par le biais du fond de panier.

19. Commutateur de données à trajets multiples selon la revendication 12 adapté de sorte que le module de commutation particulier ne puisse pas transmettre d'autres paquets présentant la même adresse source que le paquet par le biais du fond de panier alors que l'adresse source est associée au module de commutation particulier.

20. Commutateur de données à trajets multiples selon la revendication 12 adapté de sorte que tous les autres modules de commutation ne puissent pas transmettre d'autres paquets présentant l'adresse source comme une adresse de destination par le biais du fond de panier alors que l'adresse source est associée au module de commutation particulier.

21. Commutateur de données à trajets multiples selon la revendication 12 adapté de sorte que, après que l'adresse source a été associée au module de commutation particulier, le module de commutation particulier transmette tous les autres paquets présentant la même adresse source par le biais de la matrice de monodiffusion si leurs adresses de destination respectives sont présentes dans la mémoire associée au module de commutation particulier.

22. Appareil pour le transfert de paquets dans un commutateur de données à trajets multiples (100) présentant une pluralité de modules de commutation (110, 120, 130, 200), l'appareil comprenant :
moyens pour vérifier que chaque paquet entrant présente une adresse de destination connue ;
moyens pour vérifier que chaque paquet entrant présente une adresse source connue ;
moyens pour transférer chaque paquet présentant une adresse de destination connue par le biais d'un fond de panier de commutation sur un trajet de monodiffusion (150), sauf si le paquet présente une adresse source inconnue ; et
moyens pour transférer chaque paquet présentant une adresse de destination connue et une adresse source inconnue par le biais du fond de panier de commutation sur un trajet de multidiffusion (170).

23. Appareil selon la revendication 22 comprenant en outre des moyens d'apprentissage de source, dans lequel une adresse source inconnue d'un paquet est associée à un module de commutation particulier qui reçoit le paquet provenant d'un réseau.

24. Appareil selon la revendication 23 dans lequel les moyens d'apprentissage de source comprennent en outre des moyens d'enregistrement de l'adresse source, et les moyens d'enregistrement de l'adresse source enregistrent l'adresse source dans une mémoire du module de commutation particulier.

25. Appareil selon la revendication 24 dans lequel les moyens d'enregistrement de l'adresse source enregistrent l'adresse source dans des mémoires respectives de tous les autres modules de commutation.

26. Appareil selon la revendication 23 dans lequel les moyens d'apprentissage de source comprennent des moyens pour empêcher temporairement le module de commutation particulier de transmettre d'autres paquets présentant la même adresse source que le paquet par le biais du fond de panier.

27. Appareil selon la revendication 23 dans lequel les moyens d'apprentissage de source comprennent des moyens pour empêcher le module de commutation particulier de transmettre d'autres paquets présentant la même adresse source que le paquet par le biais du fond de panier alors que l'adresse source est associée au module de commutation particulier.

28. Appareil selon la revendication 23 dans lequel les moyens d'apprentissage de source comprennent des moyens pour empêcher temporairement d'autres modules de commutation de transmettre des paquets présentant l'adresse source comme une adresse de destination par le biais du fond de panier.

29. Appareil selon la revendication 23 dans lequel les moyens d'apprentissage de source comprennent des moyens pour empêcher d'autres modules de commutation de transmettre des paquets présentant l'adresse source comme une adresse de destination par le biais du fond de panier alors que l'adresse source est associée au module de commutation particulier.
